# EUROPÄISCHE PATENTSCHRIFT

(11) **EP 4 002 959 B1**
(45) Veröffentlichungstag und Bekanntmachung des Hinweises auf die Patenterteilung: **01.01.2025**
(21) Anmeldenummer: 21207812.5
(22) Anmeldetag: 11.11.2021
(51) Int. Cl.: H05B 47/105, H05B 45/20, G01N 27/22, G01W 1/14

(54) **STRASSENLEUCHTE MIT WETTERSENSITIVER LICHTABGABE**
STREET LAMP WITH WEATHER-SENSITIVE LIGHT EMISSION
LUMINAIRE D'ÉCLAIRAGE PUBLIC À ÉMISSION LUMINEUSE SENSIBLE À LA MÉTÉO

(30) Priorität: 12.11.2020 DE 102020129845
(43) Veröffentlichungstag der Anmeldung: 25.05.2022
(73) Patentinhaber: Siteco GmbH, 83301 Traunreut (DE)
(72) Erfinder: Wimmer, Kilian, 83362 Surberg (DE); Wuppinger, Bernhard, 83362 Surberg (DE)
(74) Vertreter: Schmidt, Steffen

(56) Entgegenhaltungen:
- EP-A1- 2 884 312
- CN-A- 106 704 979
- GB-A- 966 769
- JP-A- 2010 107 528
- US-A1- 2007 132 599
- US-A1- 2018 124 900

## Beschreibung

Die vorliegende Erfindung betrifft eine Straßenleuchte, welche dazu eingerichtet ist, wetterabhängig eine Lichtabgabe zu verändern.

Das Wetter hat einen starken Einfluss auf die Sichtverhältnisse im Straßenverkehr. So ändert sich bei Schnee oder Regen die Beleuchtungsaufgabe einer Straßenleuchte. Eine Beleuchtung, die bei Trockenheit und guten Sichtverhältnissen als ideal wahrgenommen wird, kann bei Niederschlag zu starker Streuung oder Blendung führen, was von Verkehrsteilnehmern als unangenehm und ermüdend empfunden wird. Dies kann auch zu einer Beeinträchtigung der Verkehrssicherheit führen.

EP 2 884 312 A1 offenbart eine Straßenleuchte gemäß dem Oberbegriff des Anspruchs 1. Weitere Leuchten und Wettersensoren sind in den Druckschriften US 2018/124900 A1, CN 106 704 979 A, GB 966 769 A, JP 2010 107528 A und US 2007/132599 A1 offenbart.

Aufgabe der vorliegenden Erfindung ist es, eine Straßenleuchte bereitzustellen, welche ihre Beleuchtungsaufgabe auch bei sich verändernden Wetterlagen bestmöglich erfüllen kann.

Gelöst wird die Aufgabe durch eine Straßenleuchte nach Anspruch 1.

Eine Besonderheit der Straßenleuchte gemäß der vorliegenden Erfindung besteht in einem Wettersensor, der dafür eingerichtet ist, Regen und/oder Schnee zuverlässig zu detektieren. Dazu weist der Wettersensor wenigstens ein Elektrodenpaar auf einem Isolierkörper auf, und ist dazu eingerichtet, den Widerstand oder die Kapazität zwischen den beiden Elektroden zu messen. Wenn die Elektroden beabstandet sind und kein leitfähiges Material dazwischen liegt, ist der Widerstand selbstverständlich sehr hoch. Wenn jedoch Feuchtigkeit zwischen die Elektroden gerät, nimmt der Widerstand ab. Alternativ lässt sich die Feuchtigkeit zwischen den Elektroden auch durch eine Kapazitätsbestimmung ermitteln. Daher kann die Höhe des Widerstands bzw. die Höhe der Kapazität direkt verwendet werden, um die Leuchte an die Wetterbedingungen anzupassen. Beispielsweise kann bei Verringerung des Widerstands bzw. der Kapazität der Lichtstrom verändert werden, um eine Sekundärblendung der Verkehrsteilnehmer durch an der Regen- oder Schneeoberfläche reflektierten Licht zu verringern. Alternativ oder zusätzlich kann auch die Lichtfarbe verändert werden. Es ist bekannt, dass der Blauanteil des Lichts zu einer höheren Blendung führt als der Rotanteil. So kann beispielsweise bei detektiertem Schnee oder Regen der Rotanteil gegenüber dem Blauanteil erhöht werden, so dass die Blendung verringert wird.

Erfindungsgemäß weist die Straßenleuchte wenigstens drei Elektroden auf, wobei zwei Elektroden in einem geringerem Abstand und die dritte Elektrode in einem größeren Abstand zu einer der beiden erstgenannten Elektroden angeordnet ist und die elektronische Schaltung ist dazu eingerichtet, sowohl den Widerstand oder die Kapazität zwischen den zwei näher beabstandeten Elektroden als auch den Widerstand oder die Kapazität zwischen den zwei weiter beabstandeten Elektroden zu messen. Durch die Messung der Widerstände bzw. Kapazitäten über zwei verschieden große Abstände der Elektroden lässt sich präziser eine Aussage über die Art und Intensität des Niederschlags treffen. Beispielsweise kann durch die Messung über den kürzeren Elektrodenabstand eine präzise Aussage über Regen getroffen werden, während die Messung über den größeren Elektrodenabstand insbesondere eine Aussage über Schneefall erlaubt, weil der Schnee in Form einer geschlossenen Schicht auch in der Lage ist, einen größeren Elektrodenabstand elektrisch zu überbrücken.

Gemäß einer bevorzugten Ausführungsform ist der größere der zwei Elektrodenabstände in einer vertikalen Richtung angeordnet und die Straßenleuchte weist unterhalb der zwei weiter beabstandeten Elektroden eine Ebene auf, auf der sich Schnee ansammeln kann, so dass bei Schneefall der größere Abstand der beiden Elektroden durch Schnee überbrückt werden kann. Der auf der Ebene sich ansammelnde Schnee kann sukzessive eine immer größere Schichtdicke bilden, so dass der größere Abstand der beiden Elektroden teilweise oder ganz überbrückt wird. Durch die Widerstands- oder Kapazitätsmessung lässt sich daher eine Aussage darüber treffen, ob Schnee und ggf. sogar wieviel Schnee vorliegt. Diese Ausführungsform ist daher besonders günstig, um die Leuchte auch an geänderte Wetterbedingungen im Hinblick auf eine geschlossene Schneedecke steuern zu können. Die beiden weiteren Elektroden, welche in einem geringeren Abstand zueinander angeordnet sind, können unabhängig davon für die Bestimmung von Regen verwendet werden.

Gemäß einer bevorzugten Ausführungsform liegt der definierte Abstand zwischen den zwei Elektroden im Bereich von 1 mm bis 10 mm liegt und bei der Ausführungsform mit drei Elektroden liegt der größere Abstand zwischen der zweiten Elektrode und der dritten Elektrode im Bereich von 10 mm bis 20 mm. Der geringere Abstand von 1 mm bis 10 mm eignet sich zum Detektieren von Regen, während der größere Abstand von 10 mm bis 20 mm insbesondere zum Detektieren von Schnee geeignet ist.

Gemäß einer bevorzugten Ausführungsform besteht eine der Elektroden aus einem Leuchtengehäuse, einem Leuchtenmast oder einem sonstigen strukturellen Bauteil der Straßenleuchte, welches aus Metall gebildet ist. Wenigstens eine der zwei oder drei Elektroden kann durch ein metallisches Bauteil der Leuchte gebildet werden. Insbesondere wenn der Wettersensor z.B. auf der Oberseite des Leuchtengehäuses angeordnet ist, kann das Leuchtengehäuse selbst als eine Elektrode dienen, da dieses ohnehin aus einem metallischen Material gebildet ist. Es können jedoch auch ein Leuchtenmast, ein Leuchtenmastausleger oder ein sonstiges Trage- oder Verblendungsteil der Leuchte als Elektrode dienen, sofern die eine oder die beiden anderen Elektroden mit einem Isolationskörper getrennt von diesem Bauteil angeordnet sind. Dies vereinfacht den Aufbau der Leuchte, weil eine separate Elektrode eingespart werden kann.

Gemäß einer bevorzugten Ausführungsform ist der Isolationskörper ein zylindrischer Körper, der vorzugsweise vertikal an der Leuchte angeordnet ist. Der zylindrische Isolationskörper hat den Vorteil, dass er symmetrisch zu allen Seiten die gleiche Oberflächengeometrie bereitstellt. Die Elektroden können beispielsweise als durchgehende Ringe auf der Zylindermantelfläche angebracht sein. Dieser Aufbau wird unabhängig davon, aus welcher Richtung der Niederschlag auf den Sensor auftrifft, immer in gleicher Weise mit einer Widerstands- oder Kapazitätsänderung auf den Niederschlag reagieren.

Gemäß einer bevorzugten Ausführungsform ist der Isolationskörper austauschbar, um den Abstand der zwei Elektroden zueinander durch Auswahl des Isolationskörpers mit einer dem gewünschten Abstand entsprechenden Dicke des Isolationskörpers einzustellen. In dieser Ausführungsform ist der Aufbau des Wettersensors besonders einfach und ermöglicht dennoch eine Anpassung zur Detektion verschiedener Niederschlagsarten. Beispielsweise kann eine dickere Isolationsscheibe zur Detektion von Schnee und eine dünneren Isolationsscheibe zur Detektion von Regen ausgewählt werden. Die eine Elektrode kann beispielsweise durch einen zylindrischen metallischen Körper auf der Isolationsscheibe und die andere der wenigstens zwei Elektroden durch eine Gehäuseoberfläche oder eine sonstige Oberfläche der Leuchte unterhalb der Isolationsscheibe gebildet sein.

Gemäß einer bevorzugten Ausführungsform ist zwischen den zwei Elektroden ein elektrisch isolierender, saugfähiger Abstandshalter vorgesehen, wobei wenigstens eine Seite des säugfähigen Abstandskörpers Witterungsbedingungen ausgesetzt ist, so dass er Feuchtigkeit aus Niederschlag aufnehmen kann. Im Betrieb saugt sich bei einsetzenden Regen der Abstandshalter mit Feuchtigkeit voll. Nach Beendigung des Regens trocknet der saugfähige Abstandshalter erst mit einer Zeitverzögerung aus, so dass die Messung der Widerstands- oder Kapazitätsänderung erst mit einer gewissen zeitlichen Verzögerung auf die geänderte Wetterbedingung anspricht. Diese zeitliche Verzögerung kann durch die Wahl der Dicke des Abstandshalters so eingestellt werden, dass sie dem Abtrocknen der Straße nach Beendigung des Regens entspricht. Dadurch kann die Lichtabgabe der Leuchte entsprechend dem Zustand der Straße angepasst werden, ohne dass eine Zeitverzögerung in der elektronischen Steuerung der Leuchte notwendig ist. Diese Ausführungsform ist daher besonders bevorzugt für Leuchten, die über keine komplexe elektronische Steuerung in einem Vorschaltgerät der Leuchtmittel oder sonstiger elektronischer Komponenten verfügen. Diese Ausführungsform eignet sich daher auch besonders zur Nachrüstung von Leuchten, die über keine entsprechende komplexe elektronische Steuereinrichtung verfügen. Der Wettersensor kann einfach zur Steuerung eines bereits vorhandenen konventionellen Vorschaltgerätes der Leuchte verwendet werden.

Gemäß einer bevorzugten Ausführungsform ist eine der beiden Elektroden auf dem saugfähigen Abstandskörper als Gitterelektrode ausgebildet. Die Gitterelektrode sorgt dafür, dass der saugfähige Abstandskörper auf wenigstens einer Seite den Wetterbedingungen ausgesetzt ist, so dass sich der Abstandskörper wie ein Schwamm bei einsetzendem Niederschlag mit Feuchtigkeit vollsaugen kann und nach Beendigung des Niederschlags die Feuchtigkeit langsam wieder abgeben kann.

Gemäß einer bevorzugten Ausführungsform ist der Abstandskörper gegenüber einem wärmeentwickelnden Bauteil der Leuchte, insbesondere einem Leuchtmittel, so angeordnet, dass sich der Abstandskörper beim Betrieb der Leuchte durch das Bauteil erwärmen kann, z.B. durch Wärmeübertragung oder durch Wärmestrahlung. Die Anordnung des saugfähigen Abstandskörpers in der Nähe eines im Betriebe der Leuchte wärmeentwickelnden Bauteils hat den Vorteil, dass die Abtrocknungsgeschwindigkeit des Abstandskörpers nach Beendigung des Regens unter dem Einfluss der von der Leuchte im Betrieb erzeugten Wärme vergrößert wird. Dadurch kann die Zeitkonstante, mit der der Abstandskörper nach Beendigung des Regens austrocknet, an die Trocknungsgeschwindigkeit der Straßenoberfläche angepasst werden.

Gemäß einer bevorzugten Ausführungsform ist die Steuerschaltung so eingerichtet, dass sie bei einer gemessenen Widerstandsverringerung oder einer gemessenen Kapazitätsverringerung den Lichtstrom verringert und/oder ein Verhältnis der Lichtfarben Blau und Rot weiter in Richtung Rot verschiebt. Während bei einer trockenen Straße verhältnismäßig viel Licht der Straßenleuchte durch die dunkle Farbe der Straßenoberfläche absorbiert wird, wird bei einer feuchten Straße ein höherer Anteil des Lichts reflektiert oder gestreut. Dieses Reflexions- oder Streulicht kann für eine Blendung der Verkehrsteilnehmer sorgen. Um diese Blendung zu reduzieren, wird durch die erfindungsgemäße Leuchte die Intensität eines Lichtstroms einfach verringert. Da insgesamt genug Licht durch das zusätzliche Reflexions- bzw. Streulicht bei regennasser Straße vorhanden ist, genügt auch der in der Intensität verringerte Lichtstrom, um ein ausreichende Beleuchtungsniveau zu erzeugen. Das gleiche gilt für die Reflexion an einer Schneeoberfläche. Der Lichtstrom kann durch Dimmen von Leuchtmitteln reduziert werden oder durch Ändern der Lichtverteilung der Leuchte zu einer breiteren Lichtverteilung. Gemäß einer zusätzlichen oder alternativen Ausführungsform kann auch das Verhältnis der Lichtfarben blau und rot angepasst werden. Blaues Licht ist dafür bekannt, dass es zu einer stärkeren Blendung führt als rotes Licht. Durch die Verringerung des Blauanteils und die Erhöhung des Rotanteils kann daher die Blendung verringert werden. Während bei trockenen Straßenverhältnissen weißes Licht für eine farbtreue Widergabe der Straße bevorzugt ist, wird bei Regennässe oder Schneebedingungen die Blendung durch die Veränderung der Farbwidergabe reduziert. Dadurch ist die Farbtreue zwar nicht mehr die gleiche, wie bei trockenen Straßenverhältnissen, dies ist jedoch bei kritischen Wetterverhältnissen auch nicht erforderlich.

Gemäß einer bevorzugten Ausführungsform der Straßenleuchte mit drei Elektroden ist die Steuerschaltung dazu eingerichtet, den Lichtstrom noch weiter zu verringern und/oder das Verhältnis der Lichtfarben noch weiter in Richtung zu rotem Licht zu verändern, wenn ferner ein verringerter Widerstand oder eine verringerte Kapazität zwischen den zwei weiter beabstandeten Elektroden gemessen wird. Eine Schneeoberfläche reflektiert bzw. streut das Licht der Straßenleuchte noch stärker als eine regennasse Oberfläche. Daher ist in dieser Ausführungsform vorgesehen, dass die Veränderungen der Beleuchtung bei der Detektion einer Schneeoberfläche durch die weiter beabstandeten Elektroden noch verstärkt wird, um die erhöhte Sekundärblendung aufgrund der Schneeoberfläche weiter zu verringern.

Weitere Vorteile und Merkmale der vorliegenden Erfindung werden aus der nachfolgenden Beschreibung bevorzugter Ausführungsformen deutlich, die in Zusammenhang mit den beigefügten Figuren gegeben wird. In den Figuren ist Folgendes dargestellt:
- Figuren 1a-1c: zeigen Seitenansichten von Wettersensoren auf einer Straßenleuchte gemäß verschiedener Ausführungsformen.
- Figur 1d: zeigt eine Aufsicht auf einen Wettersensor gemäß den Ausführungsformen nach Figuren 1a-1c.
- Figur 2: zeigt eine Seitenansicht einer alternativen Ausführungsform eines Wettersensors einer Straßenleuchte in einer weiteren Ausführungsform.
- Figur 3: zeigt eine Explosionsansicht des Aufbaus des Sensorelements der Figur 2.
- Figur 4: zeigt eine Seitenansicht des Sensorelements der Figuren 2 und 3.
- Figur 5: zeigt ein Blockschaltbild für eine elektronische Schaltung zur Messung des Widerstands für einen Wettersensor gemäß einer Ausführungsform der Erfindung.

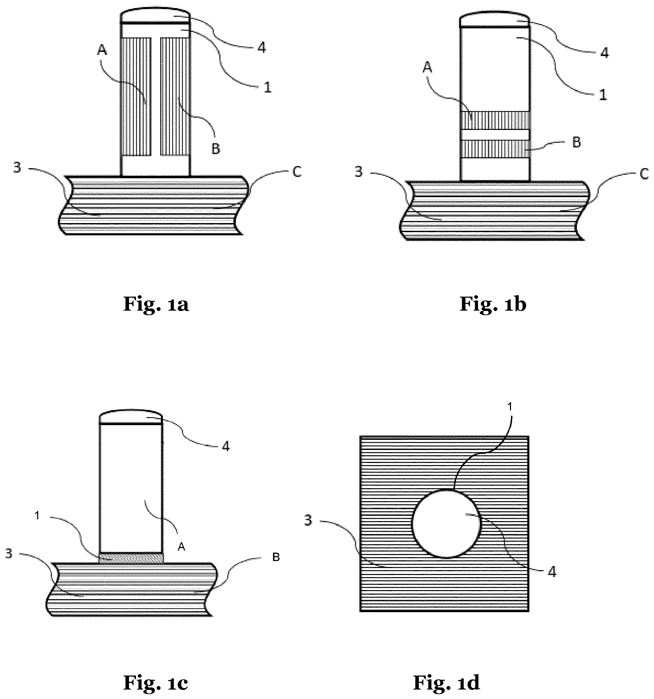

In den Figuren 1a bis 1c sind verschiedene Ausführungsformen von Wettersensoren für Straßenleuchten gemäß der Erfindung dargestellt. Die Straßenleuchte selbst ist nicht dargestellt, sondern nur ein Abschnitt 3 ihres Leuchtengehäuses.

In den Figuren 1a und 1b besitzt der Wettersensor einen zylindrischen Isolationskörper 1, auf dessen Mantelfläche zwei Elektroden A und B angeordnet sind. In der Ausführungsform nach Figur 1b sind die Elektroden A und B als konzentrische Ringe übereinander vorgesehen mit einem definierten Abstand zwischen den Elektroden, der beispielsweise zwischen 1 mm und 10 mm beträgt. In der Ausführungsform in Figur 1a sind die beiden Elektroden in Längsrichtung des zylindrischen Isolierkörpers 1 angeordnet und weisen ebenfalls einen Abstand zueinander auf, der beispielsweise zwischen 1 mm und 10 mm beträgt. Der zylindrische Isolationskörper 1 ist in vertikaler Richtung der Leuchte z.B. auf dem Gehäuse 3 angebracht. Der zylindrische Isolierkörper 1 ist nach oben mit einer runden Kappe 4 abgeschlossen, die ein Abtropfen von Regenwasser oder Schnee begünstigt. In diesen Ausführungsformen ist eine elektrische Steuerschaltung vorgesehen, welche den Widerstand oder die Kapazität zwischen den Elektroden A und B misst. Aus der Kapazitäts- oder Widerstandsänderung kann auf das Vorliegen eines Feuchtigkeitsfilms in dem Bereich zwischen den beiden Elektroden A und B geschlossen werden. Diese Messungen dienen dazu, um eine elektronische Steuerung der Leuchte (in den Figuren nicht dargestellt) anzusteuern, um die Lichtabgabe der Leuchte zu verändern.

In den Ausführungsformen nach Figuren 1a und 1b ist ferner noch eine dritte Elektrode C vorgesehen, die in einem größeren Abstand zu einer oder beiden der erst genannten Elektroden A und B angeordnet ist. In dem Beispiel beträgt der Abstand zwischen 10 mm und 20 mm. Die Elektrode C ist durch einen Teil des Leuchtengehäuses 3 selbst gebildet. Wie in der Aufsicht auf Figur 1d dargestellt, weist das Leuchtengehäuse 3 eine Ebene auf, von der sich der zylindrische Isolationskörper 1 vertikal erstreckt. Auf der Oberfläche des Leuchtengehäuses 3 kann sich Schnee ansammeln, der bei einer wachsenden Schichtstärke den Abstand zwischen der Elektrode C und A bzw. B überbrückt. Daher kann durch eine Widerstands- oder Kapazitätsmessung zwischen der dritten Elektrode C und einer der beiden Elektroden A oder B auf einen Niederschlag in Form von Schnee geschlossen werden. Auch diese Messung dient dazu, die Lichtabgabe der Straßenleuchte an die geänderten Wetterbedingungen anzupassen.

Die Figur 1c zeigt eine alternative Ausführungsform. In dieser Ausführungsform ist eine Elektrode A als zylindrischer Körper ausgebildet, der aus Metall, z.B. aus Edelstahl hergestellt ist. Die Elektrode A sitzt auf einer Scheibe, welche den Isolierkörper 1 in dieser Ausführungsform bildet. Die Scheibe 2 ist zwischen der Elektrode A und einer Elektrode B, die auch in dieser Ausführungsform als Teil des Leuchtengehäuses 3 ausgebildet, angeordnet. Die Funktionsweise ist wie vorhergehend beschrieben. Bei detektierter Feuchtigkeit durch Regen oder Schnee ändert sich der Widerstand bzw. die Kapazität zwischen den Elektroden A und B. Durch die Messung der Widerstands- bzw. Kapazitätsänderung wird die Lichtabgabe an die durch Messung festgestellte geänderte Wetterbedingung angepasst. Das Beispiel in der Figur 1c ohne eine dritte Elektrode gehört jedoch nicht zur Erfindung.

Die Anpassung der Lichtabgabe kann dadurch erfolgen, dass bei festgestelltem Niederschlag (Regen oder Schnee) die Lichtintensität von Leuchtmittel in der Leuchte durch Dimmen insgesamt verringert wird, um die Blendung für Verkehrsteilnehmer durch eine regennasse Oberfläche oder eine Schneeschicht zu reduzieren. Alternativ oder zusätzlich kann auch eine Farbverschiebung von Blau zu Rot vorgenommen werden. Da rotes Licht weniger blendet als blaues Licht, kann dadurch auch die Blendung verringert werden. Neben der Möglichkeit, die Lichtintensität der Leuchtmittel insgesamt zu senken oder die Farbwidergabe zu verändern, um die Blendung zu reduzieren, kann auch die Lichtverteilung der Leuchte geändert werden, um die Lichtdichte und somit die Blendung zu reduzieren. Die Lichtverteilung wird in diesem Fall zu einer breiteren Lichtverteilung verändert, so dass sich die Beleuchtungsstärke auf der regennassen oder schneebedeckten Oberfläche verringert.

Die Anpassung der Lichtverhältnisse an die Wetterbedingungen kann auch stufenweise erfolgen. Insbesondere kann die Anpassung bei einer detektierten Schneeschicht, z.B. durch die Messung der Widerstands- bzw. Kapazitätsänderung zwischen den zwei weiter entfernten Elektroden, größer sein als bei einer Detektion von Regen durch eine Widerstands- oder Kapazitätsänderung zwischen den zwei näher zueinander angeordneten Elektroden in den Ausführungsformen mit drei Elektroden wie in Figur 1a und 1b dargestellt.

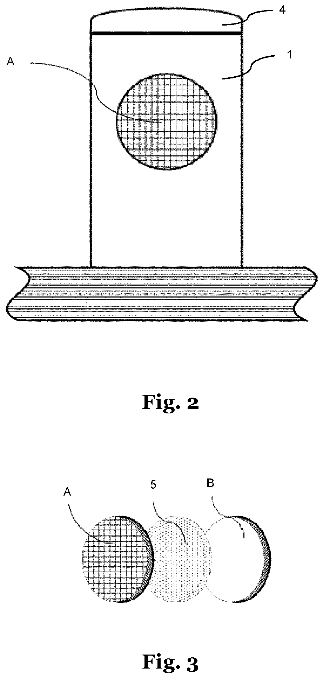

Eine weitere Ausführungsform eines Wettersensors für die erfindungsgemäße Leuchte ist in den Figuren 3 bis 5 dargestellt. In dieser Ausführungsform sind die zwei Elektroden A und B durch einen saugfähigen Abstandskörper 5 voneinander getrennt. Der Abstandskörper 5 ist aus einem Material mit Poren, in der Art eines Schwamms, ausgebildet und ist daher in der Lage, Feuchtigkeit aufzunehmen und durch Verdunstung wieder langsam abzugeben. Eine der Elektroden A ist in dieser Ausführungsform als Gitterelektrode ausgebildet, so dass der saugfähige Abstandskörper den Wetterbedingungen ausgesetzt ist. Die Anordnung aus den beiden Elektroden A und B und dem Abstandskörper 5 ist in einem Isolationskörper 1, ähnlich wie in den vorhergehend genannten Ausführungsformen, angeordnet. Im Betrieb wird sich bei einsetzendem Regen der Abstandskörper 5 allmählich mit Feuchtigkeit vollsaugen, so dass der Widerstand und die Kapazität zwischen den Elektroden A und B sich ändern. Diese Widerstands- oder Kapazitätsänderung wird, wie in den vorhergehenden Ausführungsformen, durch eine Detektionseinrichtung gemessen und zur Steuerung der Lichtabgabe genutzt. Eine Besonderheit besteht darin, dass bei Beendigung des Regens die Feuchtigkeit in dem Abstandskörper 5 erst langsam wieder verdunstet. Dadurch wird der Rückgang der Widerstands- bzw. Kapazitätsänderung mit zeitlicher Verzögerung gegenüber dem Ende des Regens erfolgen. Diese zeitliche Verzögerung ist jedoch gewünscht, weil auch das Abtrocknen der Straßenoberfläche nach Beendigen des Regens nur langsam erfolgt. Die Wiederstands- bzw. Kapazitätsänderung zwischen den Elektroden kann daher direkt dazu benutzt werden, um die Lichtabgabe der Leuchte zu steuern, weil sich auch die Lichtabgabe der Leuchte erst mit dem Abtrocknen der Straße nach Beendigung des Regens wider langsam an das Beleuchtungsniveau für trockene Straßenverhältnisse anpassen soll.

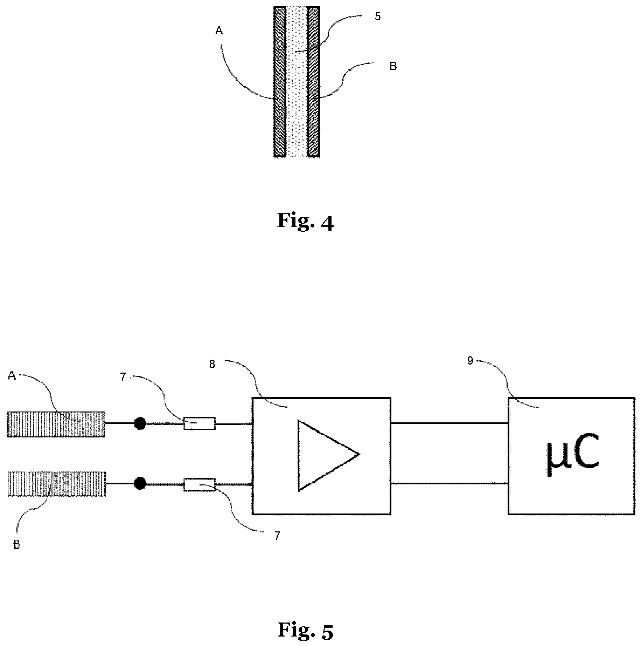

Die vorhergehend genannten Elektrodenpaare (gleichgültig ob mit größerem oder geringerem Abstand angeordnet) werden zur Messung des Widerstands an eine Elektronik angeschlossen. Figur 5 zeigt eine beispielhafte Anbindung eines Elektrodenpaars A und B gemäß einer Ausführungsform. Jede Elektrode wird über einen hochohmigen Widerstand 7 (z.B. von 1 bis 10 MOhm) elektronisch kontaktiert. Die hochohmige Ausführung ist bevorzugt, da die Elektronen von außen berührbar sind und somit der maximale zulässige Ableitstrom nicht überschritten werden darf. Als nächste Stufe ist ein Verstärker 8 vorgesehen, um die Änderung des Widerstands oder der Kapazität messbar zu machen. Die Messung wird von einem Mikrocontroller 9 durchgeführt. Dieser Mikrocontroller kann z.B. Bestandteil eines elektronischen Vorschaltgeräts der Leuchte sein oder ein sonstiger Bestandteil anderer elektronischer Einheiten der Straßenleuchte.

Der vorhergehend beschriebene Wettersensor kann auch über eine Schnittstelle an eine bekannte Steuereinrichtung für Leuchten angeschlossen werden. Beispielsweise können die Ausgangswerte der von der Elektronik erzeugten Kapazitäts- bzw. Widerstandsänderung über eine Zhaga-Schnittstelle mit einem Datenbus verbunden werden. Die Änderung der Beleuchtungsstärke kann beispielsweise über entsprechende DALI-Kommandos über im Stand der Technik bekannte Steuerungssysteme durchgeführt werden.

Die vorhergehend beschriebenen Wettersensoren haben auch den Vorteil, dass sie mit geringem Aufwand realisiert werden können. Durch die hochohmige Anwendung können die Elektroden offenliegend ausgebildet werden. Derartige Lösungen sind im Vergleich zu anderen Feuchtigkeitssensoren wie HF-Sensoren oder optischen Sensoren wesentlich einfacher und kostengünstiger umzusetzen.

### BEZUGSZEICHENLISTE

- A, B, C: Elektroden
- 1: Isolierkörper
- 3: Leuchtengehäuse
- 4: Kappe
- 5: Saugfähiger, isolierender Abstandskörper
- 7: hochohmiger Widerstand
- 8: Verstärker
- 9: Mikrocontoller

## Patentansprüche

1. Straßenleuchte, welche dazu eingerichtet ist, wetterabhängig eine Lichtabgabe zu verändern, wobei die Straßenleuchte einen Wettersensor aufweist, um Regen und/oder Schnee zu detektieren, **dadurch gekennzeichnet, dass** in dem Wettersensor auf einem Isolierkörper (1) zwei Elektroden (A, B) in einem geringerem Abstand und eine dritte Elektrode (C) in einem größeren Abstand zu einer der beiden erstgenannten Elektroden (A, B) angeordnet ist und eine elektronische Schaltung des Wettersensors dazu eingerichtet ist, sowohl den Widerstand oder die Kapazität zwischen den zwei näher beabstandeten Elektroden (A, B) als auch den Widerstand oder die Kapazität zwischen den zwei weiter beabstandeten Elektroden (B, C) zu messen, und dass die Straßenleuchte eine Steuerschaltung aufweist, welche dazu eingerichtet ist, abhängig von dem gemessenen Widerstand oder der gemessenen Kapazität einen Lichtstrom und/oder eine Lichtfarbe eines von der Straßenleuchte abgegebenen Lichts zu verändern.

2. Straßenleuchte nach Anspruch 1, wobei der größere der zwei Elektrodenabstände in einer vertikalen Richtung angeordnet ist und die Straßenleuchte unterhalb des Abstandes der zwei weiter beabstandeten Elektroden (B, C) eine Ebene aufweist, auf der sich Schnee ansammeln kann, so dass bei Schneefall der größere Abstand der beiden Elektroden durch Schnee überbrückt werden kann.

3. Straßenleuchte nach einem der vorhergehenden Ansprüche, wobei der geringere Abstand zwischen den zwei Elektroden (A, B) im Bereich von 1 mm bis 10 mm liegt und der größere Abstand zwischen der zweiten Elektrode (B) und der dritten Elektrode (C) im Bereich von 10 mm bis 20 mm liegt.

4. Straßenleuchte nach einem der vorhergehenden Ansprüche, wobei eine der Elektroden aus einem Leuchtengehäuse (3), einem Leuchtenmast oder einem sonstigen strukturellen Bauteil der Straßenleuchte, welches aus Metall gebildet ist, besteht.

5. Straßenleuchte nach einem der vorhergehenden Ansprüche, wobei der Isolationskörper (1) ein zylindrischer Körper ist, der vorzugsweise vertikal an der Straßenleuchte angeordnet ist.

6. Straßenleuchte nach einem der vorhergehenden Ansprüche, wobei der Isolationskörper (1) austauschbar ist, um den Abstand der zwei Elektroden (A, B) zueinander durch Auswahl des Isolationskörpers mit einer dem gewünschten Abstand entsprechenden Dicke des Isolationskörpers einzustellen.

7. Straßenleuchte nach einem der vorhergehenden Ansprüche, wobei zwischen den zwei Elektroden (A, B) ein elektrisch isolierender, saugfähiger Abstandskörper (5) vorgesehen ist, so dass er Feuchtigkeit aus Niederschlag aufnehmen kann.

8. Straßenleuchte nach Anspruch 7, wobei eine der beiden Elektroden (A) auf dem saugfähigen Abstandskörper als Gitterelektrode ausgebildet ist.

9. Straßenleuchte nach einem der Ansprüche 7 und 8, wobei der Abstandskörper (5) gegenüber einem wärmeentwickelnden Bauteil der Straßenleuchte, insbesondere einem Leuchtmittel, so angeordnet ist, dass sich der Abstandskörper (5) beim Betrieb der Straßenleuchte durch das Bauteil erwärmen kann, z.B. durch Wärmeübertragung oder durch Wärmestrahlung.

10. Straßenleuchte nach einem der vorhergehenden Ansprüche, wobei die Steuerschaltung so eingerichtet ist, dass sie bei einer gemessenen Widerstandsverringerung oder einer gemessenen Kapazitätsverringerung einen Lichtstrom der Straßenleuchte verringert und/oder ein Verhältnis der Lichtfarben Blau und Rot weiter in Richtung Rot verschiebt.

11. Straßenleuchte nach Anspruch 10, wobei die Steuerschaltung dazu eingerichtet ist, den Lichtstrom noch weiter zu verringern und/oder das Verhältnis der Lichtfarben noch weiter in Richtung zu rotem Licht zu verändern, wenn ferner ein verringerter Widerstand oder eine verringerte Kapazität zwischen den zwei weiter beabstandeten Elektroden (B, C) gemessen wird.

## Claims

1. Street lamp which is configured to change a light output depending on the weather,
wherein
the street lamp has a weather sensor in order to detect rain and/or snow, **characterized in that** two electrodes are arranged at a smaller distance and a third electrode (C) is arranged at a greater distance from one of the two first-mentioned electrodes (A, B) in the weather sensor on an insulation body (1), and an electronic circuit of the weather sensor is configured to measure both the resistance or the capacitance between the two more closely spaced electrodes (A, B) and the resistance or the capacitance between the two more widely spaced electrodes (B, C),
and **in that** the street lamp has a control circuit which is configured to change a luminous flux and/or a luminous color of a light output by the street lamp depending on the measured resistance or the measured capacitance.

2. Street lamp according to Claim 1, wherein the greater of the two electrode distances is arranged in a vertical direction and, below the distance between the two more widely spaced electrodes (B, C), the street lamp has a plane on which snow can accumulate, with the result that, in the event of snow, the greater distance between the two electrodes can be bridged by snow.

3. Street lamp according to one of the preceding claims, wherein the smaller distance between the two electrodes (A, B) lies in the range from 1 mm to 10 mm and the greater distance between the second electrode (B) and the third electrode (C) lies in the range from 10 mm to 20 mm.

4. Street lamp according to one of the preceding claims, wherein one of the electrodes consists of a lamp housing (3), a lamp mast or some other structural component of the street lamp which is formed from metal.

5. Street lamp according to one of the preceding claims, wherein the insulation body (1) is a cylindrical body which is preferably arranged vertically on the street lamp.

6. Street lamp according to one of the preceding claims, wherein the insulation body (1) is exchangeable in order to set the distance between the two electrodes (A, B) by selecting the insulation body with a thickness of the insulation body corresponding to the desired distance.

7. Street lamp according to one of the preceding claims, wherein an electrically insulating, absorbent spacer (5) is provided between the two electrodes (A, B) so that it can absorb moisture from precipitation.

8. Street lamp according to claim 7, wherein one of the two electrodes (A) is formed on the absorbent spacer as a grid electrode.

9. Street lamp according to one of claims 7 and 8, wherein the spacer (5) is arranged opposite a heat-generating component of the street lamp, in particular a lighting means, so that the spacer (5) can be heated by the component during operation of the street lamp, for example by heat transfer or by heat radiation.

10. Street lamp according to one of the preceding claims, wherein the control circuit is configured so that it reduces a luminous flux of the street lamp and/or shifts a ratio of the luminous colors blue and red further in the direction of red in the case of a measured resistance reduction or a measured capacitance reduction.

11. Street lamp according to claim 10, wherein the control circuit is configured to reduce the luminous flux even further and/or to change the ratio of the luminous colors even further in the direction of red light if furthermore a reduced resistance or a reduced capacitance is measured between the two further spaced electrodes (B, C).

## Revendications

1. Luminaire d'éclairage public qui est conçu pour modifier une émission lumineuse en fonction de la météo, dans lequel le luminaire d'éclairage public comprend un capteur météorologique afin de détecter la pluie et/ou la neige, **caractérisé en ce que**, dans le capteur météorologique, sur un corps isolant (1), sont disposées deux électrodes (A, B) à une faible distance et une troisième électrode (C) à une distance plus grande par rapport à une des deux électrodes (A, B) susmentionnées et un circuit électronique du capteur météorologique est conçu pour mesure aussi bien la résistance ou la capacité entre les deux électrodes les plus proches (A, B) que la résistance ou la capacité entre les deux électrodes (B, C) plus éloignées,
et **en ce que** le luminaire d'éclairage public comprend un circuit de commande qui est conçu pour modifier, en fonction de la résistance mesurée ou de la capacité mesurée, un flux lumineux et/ou une couleur de lumière d'une lumière émise par le luminaire d'éclairage public.

2. Luminaire d'éclairage public selon la revendication 1, dans lequel la plus grande des deux distances entre les électrodes est disposée dans une direction verticale et le luminaire d'éclairage public comprend, en dessous de la distance entre les deux électrodes (B, C) les plus éloignées, un plan sur lequel de la neige peut s'accumuler, de sorte que, lors d'une chute de neige, la distance la plus grande entre les deux électrodes peut être comblée par la neige.

3. Luminaire d'éclairage public selon l'une des revendications précédentes, dans lequel la distance la plus faible entre les deux électrodes (A, B) est de l'ordre de 1 mm à 10 mm et la plus grande distance entre la deuxième électrode (B) et la troisième électrode (C) est de l'ordre de 10 mm à 20 mm.

4. Luminaire d'éclairage public selon l'une des revendications précédentes, dans lequel une des électrodes est constituée d'un boîtier de luminaire (3), d'un mât de luminaire ou d'un autre composant structurel du luminaire d'éclairage public, qui est constitué de métal.

5. Luminaire d'éclairage public selon l'une des revendications précédentes, dans lequel le corps isolant (1) est un corps cylindrique qui est disposé de préférence verticalement sur le luminaire d'éclairage public.

6. Luminaire d'éclairage public selon l'une des revendications précédentes, dans lequel le corps isolant (1) peut être remplacé afin d'ajuster la distance entre les deux électrodes (A, B) grâce à la sélection du corps isolant avec une épaisseur de corps isolant correspondant à la distance souhaitée.

7. Luminaire d'éclairage public selon l'une des revendications précédentes, dans lequel, entre les deux électrodes (A, B), est prévu un corps d'écartement (5) électriquement isolant et absorbant de façon à pouvoir absorber l'humidité provenant des précipitations.

8. Luminaire d'éclairage public selon la revendication 7, dans lequel une des deux électrodes (A) est réalisée sur le corps d'écartement sous la forme d'une électrode à grille.

9. Luminaire d'éclairage public selon la revendication 7 et 8, dans lequel le corps d'écartement (5) est disposé, par rapport à un composant dégageant de la chaleur du luminaire d'éclairage public, plus particulièrement un moyen d'éclairage, de sorte que le corps d'écartement (5) peut être chauffé par le composant lors du fonctionnement du luminaire d'éclairage public, par transmission thermique ou par rayonnement thermique.

10. Luminaire d'éclairage public selon l'une des revendications précédentes, dans lequel le circuit de commande est conçu de façon à réduire, lors d'une diminution de résistance mesurée ou d'une diminution de capacité diminuée, un flux lumineux du luminaire d'éclairage public et/ou à décaler un rapport entre les couleurs de lumière bleu et rouge plus loin en direction du rouge.

11. Luminaire d'éclairage public selon la revendication 10, dans lequel le circuit de commande est conçu pour diminuer le flux lumineux encore plus et/ou pour modifier le rapport entre les couleurs de la lumière plus loin en direction de la lumière rouge lorsque, en outre, une résistance réduite ou une capacité réduite entre les deux deux électrodes (B, C) les plus éloignées est mesurée.
